# EUROPEAN PATENT APPLICATION

(11) **EP 1 711 029 A1**
(43) Date of publication of application: **11.10.2006**
(21) Application number: 05704041.2
(22) Date of filing: 24.01.2005
(51) Int. Cl.: H04Q 9/00, G06F 17/30, H04M 11/00

(54) **TERMINAL DEVICE, METHOD, AND SYSTEM CAPABLE OF AUTOMATIC EXECUTION OF PROCESS IN ACCORDANCE WITH EVENT**

(30) Priority: 26.01.2004 JP 2004016789
(71) Applicant: MATSUSHITA ELECTRIC INDUSTRIAL CO., LTD., Kadoma-shi, Osaka 571-8501 (JP)
(72) Inventor: OASHI, Masahiro, Kyoto 610-0331 (JP); KANAMARU, Tomokazu, Osaka 571-0055 (JP); TAKAO, Naoya, Kobe-shi, Hyogo 657-0855 (JP); TSUKIDATE, Ryota, Kanagawa 212-0023 (JP); NISHIO, Toshiro, Osaka 573-1115 (JP); ENDO, Yasuo, Chiba 273-0005 (JP); IWATA, Yoshiaki, Moriguchi-shi, Osaka 570-0031 (JP)
(74) Representative: Gassner, Wolfgang
(86) International application number: PCT/JP2005/000860
(87) International publication number: WO 2005/072002

(57) **Abstract**

To provide a terminal device capable of independently determining an occurrence of an event, and autonomously processing a service in response to the event. An event detection section (205) detects a predetermined event. A service retrieving section (206) retrieves a service corresponded to the detected event. A service execution section (207) determines an application program related to the retrieved service, and another terminal device which cooperatively executes the application program. Then, the service execution section (207) instructs an application management section (203) and an application execution section (204) of the own terminal device and the other terminal device to obtain and execute the program.

## Description

### TECHNICAL FIELD

The present invention relates to a terminal device, a method, and a system capable of automatically executing a process in response to an event, and more particularly relates to a terminal device and a method for independently determining an occurrence of an event, downloading from a server a program of an application corresponded to the event, and autonomously executing a service, and a system having the terminal device included therein.

### BACKGROUND ART

As a conventional terminal device capable of downloading a computer program (hereinafter referred to as a "program"), there is a terminal device having a program distribution function (refer to patent document 1 for example). In the present invention, a program distribution means that an application server distributes a program to a terminal device which is represented by a mobile phone or a PHS (Personal Handy-phone System). The terminal device downloads and executes the program distributed from the application server. Thus, the terminal device is allowed to realize various functions that are added to the original functions according to a user's preference.

One of the probable software architectures for realizing the program distribution is JAVA (registered trademark). JAVA (registered trademark) comprises a virtual machine mechanism, and is capable of operating application software (hereinafter referred to as an "application") independent of hardware or an OS (Operating System) of a terminal device which implements a virtual machine. Thus, JAVA (registered trademark) is considered as an effective software architecture not only in a computing field which is represented by a workstation or a personal computer (PC), but also for realizing a program distribution to household appliances.

As a concrete example of such program distribution, there is a game program distribution for a mobile phone. This allows the user to download a game program which the user prefers, and to enjoy the game whenever convenient by using a mobile phone. In the future, various applications such as a telephone directory or a daily planner may also be subjected to the program distribution. Such distribution of an application allows the user to download and use an application having a function which he/she wishes to use, a user interface convenient for him/her, a display screen configuration preferable to him/her, or the like.

As for a terminal device, in addition to a middle/long distance wireless communication device for realizing voice conversations, there is a terminal device with a short-distance transmitting/receiving device which employs infrared rays or a radio wave. Services of using such terminal device which incorporates the short-distance transmitting/receiving device as a controller of a terminal device which is subjected to control has been expanding by developing the aforementioned program distribution. As an example of the above services, the terminal device may be used as: (1) a remote controller for household appliances such as a television, an air conditioner, or the like; (2) a device used in a restaurant for a user to select a menu and place an order; (3) a device used in a library for searching or reserving a book; and (4) a device used in a store such as a bookstore, a CD shop, a department store, or the like, for searching for a location of an article desired by the user, searching for articles available in the store, or making a purchase order of an article. In order to realize such services, a program which is executable by a terminal device is required for controlling a terminal device subjected to control.

FIG. 10 is a diagram illustrating a conventional system described in the patent document 1 in which a terminal device executes a process in response to an event. In FIG. 10, a distribution station 1001 includes a program distribution section 1011, a service start notice section 1012, and a service end notice section 1013. The program distribution section 1011 distributes to a mobile communication terminal device 1003 in a service area Asr, at least one program P stored in the distribution station 1001. The program P is created with a language such as JAVA (registered trademark), which is executable in the mobile communication terminal device 1003. In the program P a procedure is written for the mobile communication terminal device 1003 to remotely control a terminal device subjected to control (not shown).

The service start notice section 1012 determines the mobile communication terminal device 1003 which entered into the service area Asr by referring to an entry stored in a switching station 1002. The service start notice section 1012 transmits to the determined mobile communication terminal device 1003, identification information Icp which uniquely determines a program P in the distribution station 1001, and a service start notice Nss. The service end notice section 1013 determines, by referring to the entry stored in the switching station 1002, a mobile communication terminal device 1003 which exits from the above service area Asr. The service end notice section 1013 transmits to the determined mobile communication terminal device 1003, the identification information Icp and a service end notice Nst.
[Patent document 1] Japanese Laid-Open Patent Publication No. 2003-219465

### DISCLOSURE OF THE INVENTION

### PROBLEMS TO BE SOLVED BY THE INVENTION

According to the aforementioned conventional system, the distribution station 1001 determines an entry/exit of the mobile communication terminal device 1003 to/from the service area Asr, and transmits the service start notice Nss and the service end notice Nst to the mobile communication terminal device 1003. Since the distribution station 1001 is required for each service area, there is a problem that the system becomes complicated. The program P distributed by the distribution station 1001 remotely controls a terminal device subjected to control, based on a precondition that a process preinstalled in the terminal device subjected to control is invoked, thus there is a problem that a communication procedure and communication data cannot be changed in accordance with a service between the terminal device and the terminal device subjected to control.

Therefore, an object of the prevent invention is to provide a terminal device, a method, and a system capable of autonomously processing, without having a distribution station for monitoring an entry/exit of a terminal device to/from the service area, a service in response to an event whose occurrence is determined independently.

### SOLUTION TO THE PROBLEMS

The present invention is directed to a terminal device for providing a predetermined service in response to an occurrence of an event. In order to achieve the above object, the terminal device according to the present invention is comprised of an event detection section, a service retrieving section, a service execution section, an application management section, and an application execution section.

The event detection section detects a specific event. The service retrieving section retrieves from a predetermined information table, a service and an action which corresponds to the detected event. The service execution section instructs to determine and execute an application program required for an operation of the retrieved service and action. The application management section downloads, in accordance with the instruction given from the service execution section, the required application program from a server connected to a network. The application execution section operates, in accordance with the instruction given from the service execution section, the retrieved service and action by using the downloaded application program.

It is preferable that a cooperative device management section connected to a network and having information on another terminal device which provides a service in cooperation with the own terminal device is also provided. In this case, the service execution section refers to the information on the other terminal device, and provides instruction to the cooperative other terminal device to download from the server an application program required for an operation of the retrieved service and action.

The service retrieving section may download in advance, a predetermined information table from the server, or may transmit to the server the information concerned with the detected event and download only a portion of the predetermined information table which corresponds to the detected event. The service retrieving section may also transmit to the server, the information concerned with the other terminal device stored in the cooperative device management section, and download only a portion of the predetermined information table being operable in cooperation between the own terminal device and the other terminal device.

Note that the service retrieving section may also retrieve from the information table rewritten by an application program executed by the application execution section, a service and an action corresponding to the detected event. In addition, the application execution section may execute a program for exchanging data with the other terminal device which cooperatively operates a same service.

The aforementioned terminal device is configured as a system by being connected to a server via a network, wherein the server stores a plurality of application programs. The server is comprised of a data management section storing an application program corresponding to a service, and a program distribution section for distributing an application program in response to a request from at least one terminal device.

The present invention is also directed to a method for providing, by using a terminal device, a predetermined service in response to an occurrence of an event. The method of providing a service is realized by causing the terminal device to execute steps as: a step fordetectinga specific event; a step for retrieving from a prescribed information table, a service and an action corresponding to the detected event; a step for determining an application program required for operating the retrieved service and action; a step for downloading from a server connected to a network, the required application program which is determined; and a step for operating the retrieved service and action by using the downloaded application program.

### EFFECT OF THE INVENTION

According to the present invention, a terminal device can detect an event and autonomously start or end a service. Consequently, even without a distribution station for monitoring an entry/exit of a terminal device to/from a service area, the user is allowed to start or end a service without performing an operation required for download. Furthermore, by downloading a program to both a terminal device and another terminal device subjected to control, it is possible to change a communication procedure and communication data, thus a terminal device with an improved convenience over a conventional terminal device is realized.

### BRIEF DESCRIPTION OF THE DRAWINGS

[FIG. 1] FIG. 1 is a schematic diagram providing a concept of a communication system by using a terminal device according to an embodiment of the present invention.
[FIG. 2] FIG. 2 is a diagram illustrating a detailed configuration of an application server 10.
[FIG. 3] FIG. 3 is a diagram exemplifying an action information table 106.
[FIG. 4] FIG. 4 is a diagram examplifying a service information table 107.
[FIG. 5] FIG. 5 is a diagram showing a detailed configuration of terminal devices 21 to 2N.
[FIG. 6] FIG. 6 is a diagram showing an example of a terminal information table 211.
[FIG. 7] FIG. 7 is a flowchart describing a process performed by a terminal device according to an embodiment of the present invention.
[FIG. 8] FIG. 8 is a flowchart describing a process performed by a terminal device according to an embodiment of the present invention.
[FIG. 9] FIG. 9 is a flowchart describing a process performed by a terminal device according to an embodiment of the present invention.

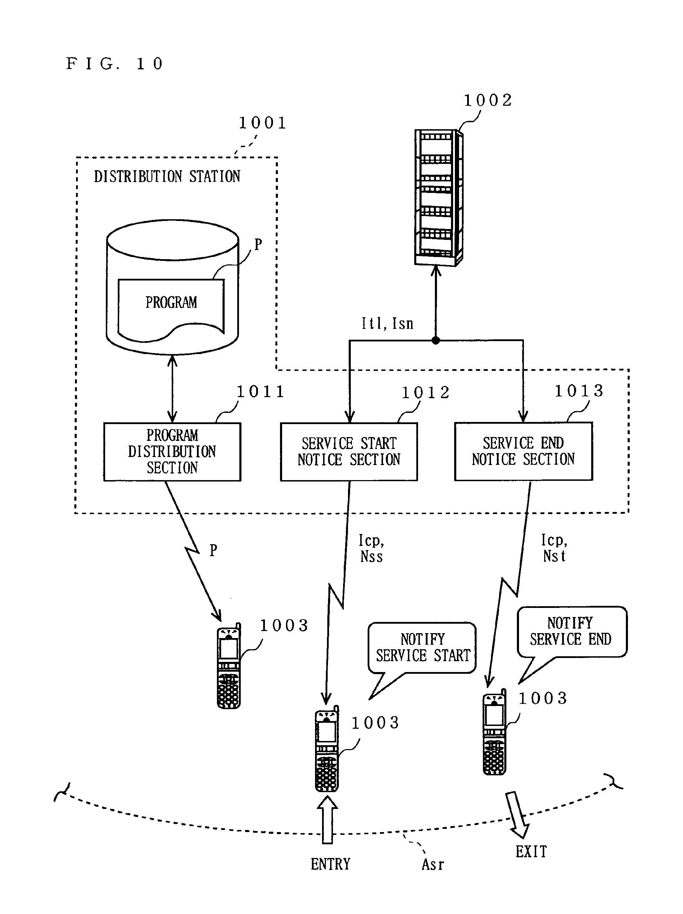

[FIG. 10] FIG. 10 is a diagram describing a conventional system in which a terminal device executes a process in response to an event.

### DESCRIPTION OF THE REFERENCE CHARACTERS

- 10: application server
- 21-2N, 1003: terminal devices
- 30: network
- 101, 1011: program distribution section
- 102: action information distribution section
- 103: service information distribution section
- 104: data management section
- 105: program
- 106: action information table
- 107: service information table
- 201: cooperative device management section
- 202: service execution transmitting / receiving section
- 203: application management section
- 204: application execution section
- 205: event detection section
- 206: service retrieving section
- 207: service execution section
- 1001: distribution station
- 1002: switching station
- 1012: service start notice section
- 1013: service end notice section

### BEST MODE FOR CARRYING OUT THE INVENTION

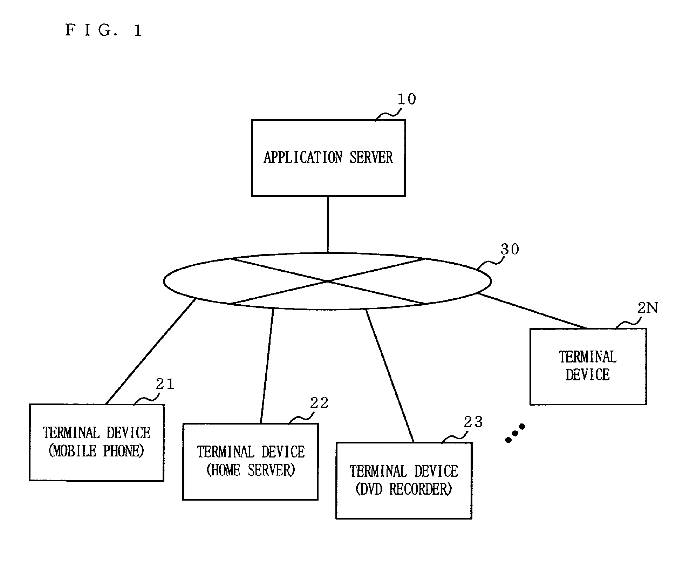

An embodiment of the present invention will be described below by referring to the drawings. FIG. 1 is a schematic drawing showing a concept of a communication system by using a terminal device according to an embodiment of the present invention. The communication system shown in FIG. 1 is configured so as to connect an application server 10 with a plurality of terminal devices 21 to 2N (N is an integer of 2 or more) via a network 30.

The application server 10 stores a program to be distributed to the terminal devices 21 to 2N, and information tables concerning action information and service information. The terminal devices 21 to 2N are devices such as household electrical appliances for communication or audio (e. g. , a digital still camera (DSC), a digital video camera (DVC), a mobile phone, a personal digital assistant (PDA), a digital television (DTV), a home server, a set top box (STB), or the like) which are connectable to a network. An example shown in FIG. 1 is a case where a terminal device 21 is a mobile phone, a terminal device 22 is a home server, and a terminal device 23 is a DVD recorder. These terminal devices 21 to 2N are capable of executing a required program and an information table downloaded from an application server 10 via a network 30, and also operable in cooperation with each other. The network 30 is a network such as the Internet, a wireless mobile phone network, a short-distance communication network using infrared rays or a radio wave.

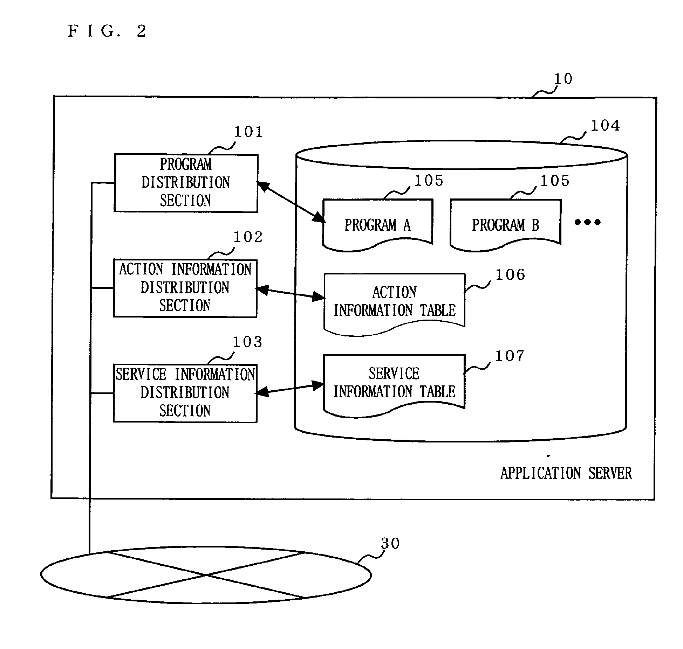

First, a detailed configuration of the application server 10 and the terminal devices 21 to 2N will be described. FIG. 2 is a diagram illustrating a detailed configuration of the application server 10. In FIG. 2, the application server 10 comprises a program distribution section 101, an action information distribution section 102, a service information distribution section 103, and a data management section 104.

The data management section 104 stores a program 105, an action information table 106 and a service information table 107. The program distribution section 101 distributes, in response to a request from the terminal devices 21 to 2N to download a program, the requested program 105 stored in the data management section 104. The action information distribution section 102 distributes, in response to an action information table distribution request from the terminal devices 21 to 2N, the action information table 106 stored in the data management section 104. The service information distribution section 103 distributes, in response to a service information distribution request from the terminal devices 21 to 2N, a service information table 107 stored in the data management section 104.

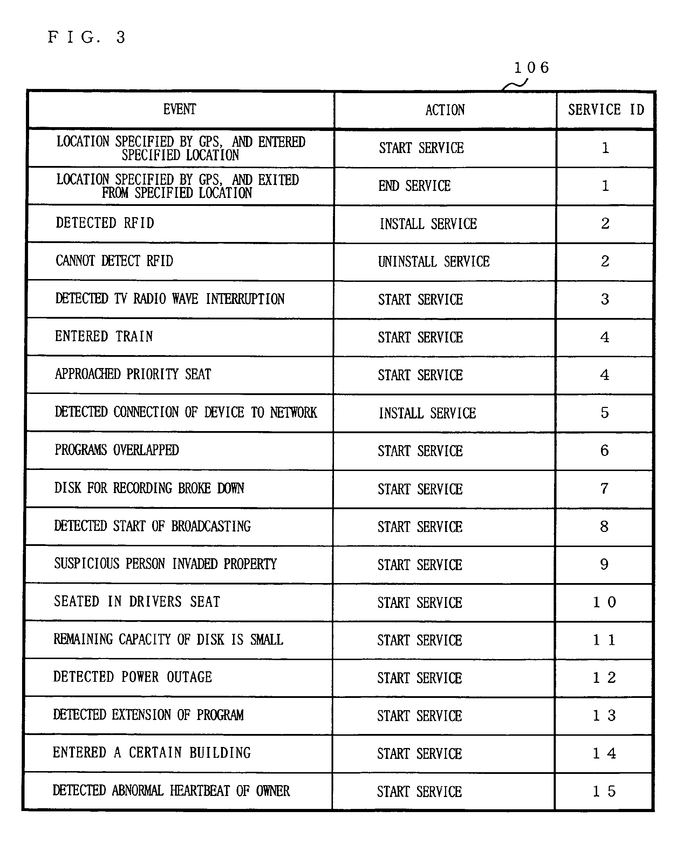

FIG. 3 is a diagram exemplifying the action information table 106. The action information table 106 shown in FIG. 3 is comprised of information representing a set of an event, an action and a service ID. The event indicates an operation of a terminal device. The action indicates an action executed by the terminal device when the event is operated. The service ID indicates an identifier for determining the terminal device which executes the action, and an application program required for executing the action. Example of services which may be listed in the action column is shown below. Note that combinations of events and actions shown in FIG. 3 are illustrative only, and various other combinations of events and actions may be freely set.

· At a specific location, a camera mobile phone automatically takes a picture, and transmits the picture to a home server. According to this service, an application for carrying out a stamp rally can be configured.
· When approaching an advertisement and selecting the advertisement, a program whose contents can be shared between specific terminal devices can be obtained.
· While watching a TV on a mobile phone away from home, if a radio wave is interrupted, a continuation is recorded in a home server or a DVD recorder at home.
· When boarding a train, a home server turns on and downloads an image which a user always watches in the train.
· On detecting a printer being connected to a network, a program for performing direct print from a mobile phone is installed; or on detecting the printer being removed from the network, a program is uninstalled.
· A DVD recorder is programmed when a home server detects overlapping programs.
· When a home server detects disk trouble, the home server notifies a mobile phone to program a DVD recorder for recording a program.
· When a mobile phone detects a start of a broadcast, the mobile phone receives the broadcast and transmits the broadcast to a home server for recording.
· When a network camera detects a suspicious person, an image of the suspicious person is transmitted to a home server for recording.
· On detecting a shortage in a remaining memory level of a mobile phone, old data stored in the memory is transmitted to the home server. By this service, it is possible to backup old data and to increase the remaining memory level of the mobile phone.

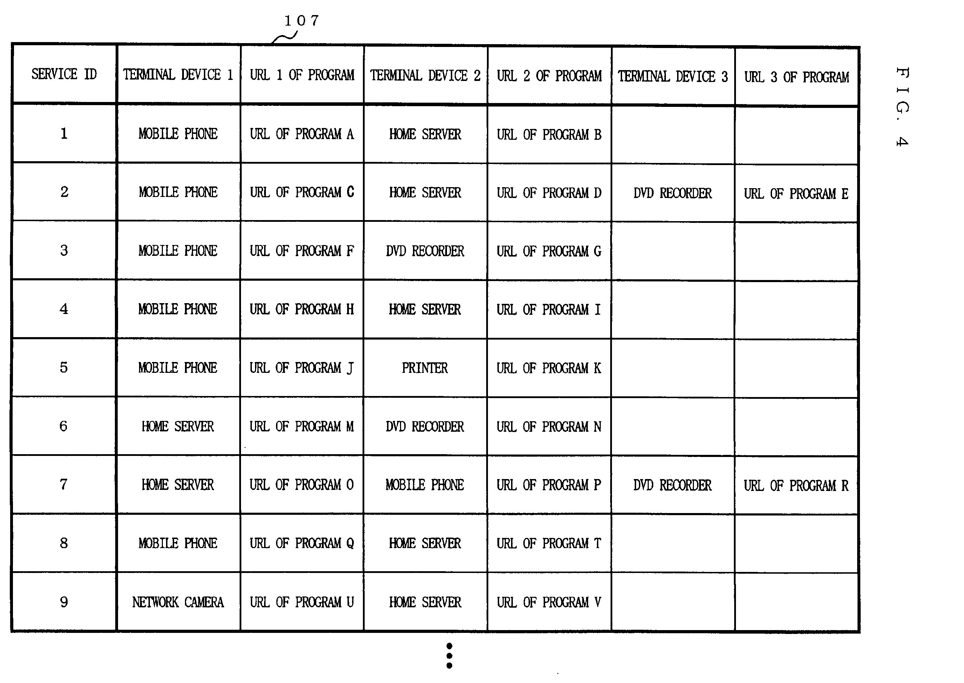

FIG. 4 is a diagram exemplifying a service information table 107. The service information table 107 shown in FIG. 4 is configured by information having a set of a service ID, and terminal information and a program URL of at least one terminal. The service ID corresponds to a service ID of the action information table 106. The terminal information indicates a terminal device which is to execute an action. The program URL indicates a URL at which stores an application program to be downloaded by a terminal device determined by the terminal information.

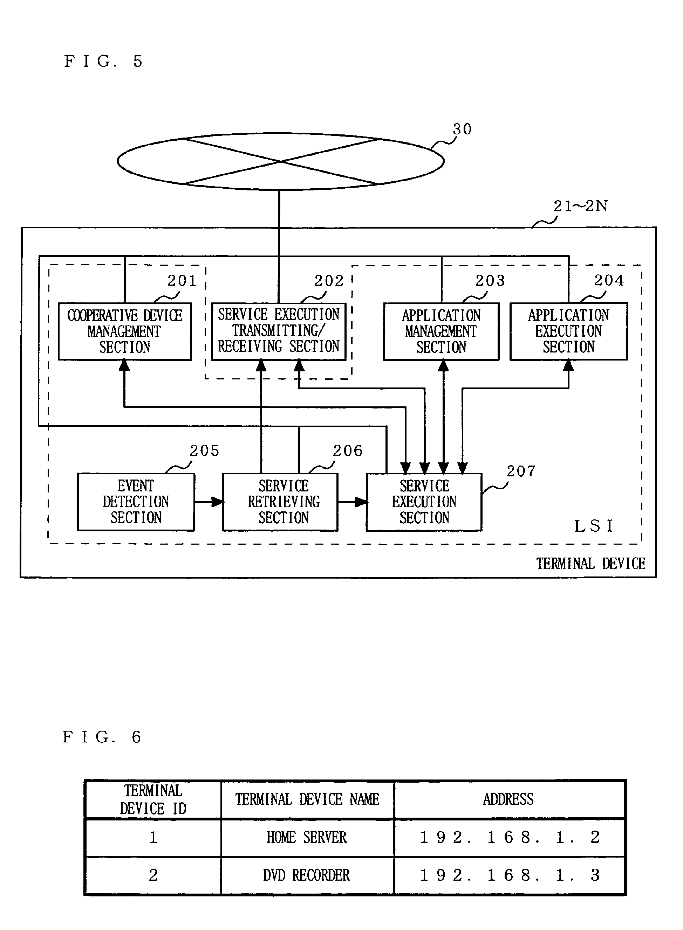

FIG. 5 is a diagram illustrating a detailed configuration of the terminal devices 21 to 2N. In FIG. 5, each of the terminal devices 21 to 2N comprises a cooperative device management section 201, a service execution transmitting/receiving section 202, an application management section 203, an application execution section 204, an event detection section 205, a service retrieving section 206, and a service execution section 207. Below, a description of the terminal device 21 representing the terminal devices 21 to 2N will be provided.

The cooperative device management section 201 manages as a terminal information table 211, the information on another terminal device which is controllable by the terminal device 21. FIG. 6 exemplifies a terminal information table 211 which includes a terminal device ID, a terminal device name, and an address. The application management section 203 downloads a required application program from the application server 10, and also manages the downloaded program. The event detection section 205 detects various events froman operation of the terminal device 21. The service retrieving section 206 downloads in advance, the action information table 106 from the application server 10, and retrieves from the action information table 106, an action and a service ID which correspond to the event detected by the event detection section 205. The service execution section 207 downloads from the service information table 107 of the application server 10, service information which corresponds to the service ID retrieved by the service retrieving section 206. Then, based on the action retrieved by the service retrieving section 206 and the downloaded service information, the service execution section 207 instructs the application management section 203 and the application execution section 204 to download and execute the application program which corresponds to the terminal device 21. In addition, the service execution section 207 instructs the service execution transmitting/receiving section 202 to instruct the other terminal device listed in the downloaded service information to execute the action retrieved by the service retrieving section 206. The service execution transmitting/receiving section 202 transmits to the other terminal device instructed by the service execution section 207 an instruction to execute an action, wherein the other terminal device is a controllable terminal device whose information is managed by the cooperative device management section 201. Furthermore, the service execution transmitting/receiving section 202 receives from the other terminal device, an instruction to execute an action, and instructs the service execution section 207 to execute the action. The application execution section 204 executes the program managed by the application management section 203.

Note that in a case where a service is not cooperatively provided by a plurality of terminal devices, a configuration of the cooperative device management section 201 is not required. In this case, without referring to the terminal information table 211, the service execution section 207 instructs, based on the action retrieved by the service retrieving section 206 and the downloaded service information, the application management section 203 and the application execution section 204 to only download and execute an application program corresponding to the own terminal device 21.

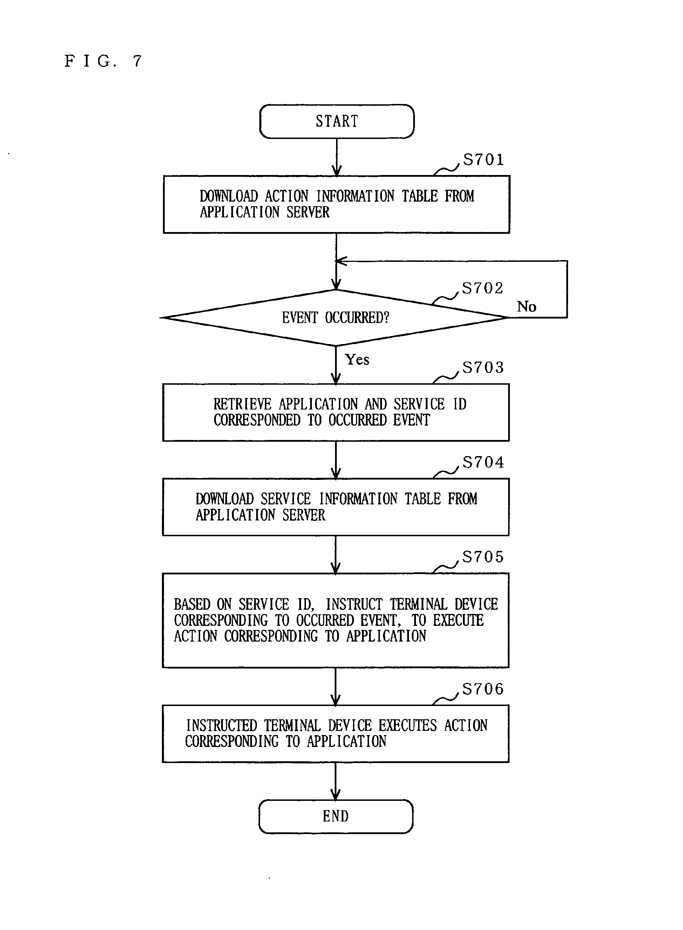

Next by using FIGS. 7 to 9, a process performed by the terminal device 21 in the above configuration will be provided. Referring to FIG. 7, when an operation of the terminal device 21 is started by powering on, or the like, the service execution transmitting/receiving section 202 transmits to the action information distribution section 102 of the application server 10 an action information table distribution request. When this request is accepted by the application server 10, the application management section 203 downloads the action information table 106 (step S701). When downloading the action information table 106 is completed, the event detection section 205 starts to monitor an operation of the terminal device 21, and detects an occurrence of a predetermined event (step S702). When an event occurs, the service retrieving section 206 uses the occurred event as a key to search through the action information table 106, and retrieves an action and a service ID corresponded to the occurred event (step S703). This retrieval is performed by comparing one by one, the occurred event with each event in the action information table 106 for finding a matching record. The retrieved action and the service ID are notified to the service execution transmitting/receiving section 202 and the service execution section 207.

When the service execution transmitting/receiving section 202 is notified from the service retrieving section 206 of the action and the service ID, the service execution transmitting/receiving section 202 transmits to the service information distribution section 103 of the application server 10 a distribution request of the service information table. When this request is accepted by the application server 10, the application management section 203 downloads the service information table 107 (step S704). When downloading the service information table 107 is completed, the service retrieving section 206 refers to the service information of the retrieved service ID, and instructs a terminal device listed in the terminal information, to execute an action corresponding to an application program listed in the program URL (step S705). Tobemore specific, for the own terminal device 21, the service retrieving section 206 gives a direct instruction to the service execution section 207, and for other terminals device 22 and 2N, the service retrieving section 206 gives an instruction to the service execution section 207 of the other terminal devices 22 to 2N via the service execution transmitting/receiving section 202 and the network 30. The service execution section 207 of each terminal device which has been given the instruction executes via the application management section 203 and the application execution section 204 an action corresponding to the application program (step S706).

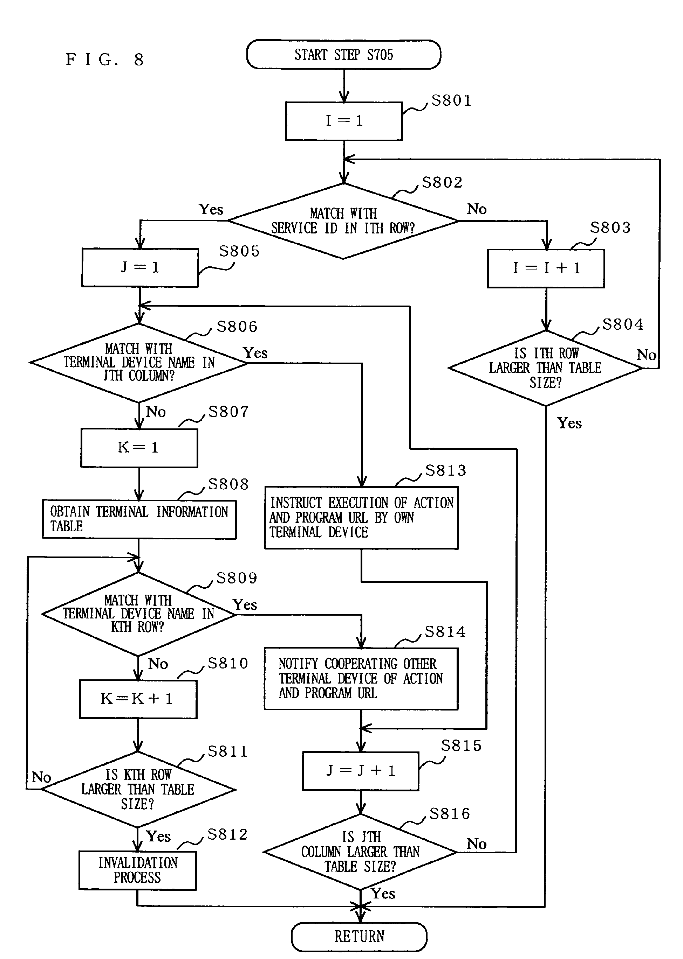

A concrete example of a process performed by the service retrieving section 206 at step S705 is described in FIG. 8. In FIG. 8, a variable for retrieving a service ID in the service information table 107 is shown as "I", a variable for retrieving terminal information is shown as "J", and a variable for retrieving a device ID in the terminal information table 211 is shown as "K". An initial value of each of the variables I, J and K is 1 (step S801, S805 and S807).

First, the service retrieving section 206 refers to a service ID in a Ith row of the service information table 107. Here, the service retrieving section 206 determines whether the service ID in the Ith row matches with the retrieved service ID or not (step S802). When it does not match, the service retrieving section 206 increments the variable I by one (step S803), and determines again whether the service IDmatches or not, by referring to a service ID in the next row (step S802). This process is repeated until a matching service ID is detected. In a case where there is no matching service ID even after going to a last row of the service information table 107, the service retrieving section 206 terminates the process (step S804).

When a matching service ID is detected, the service retrieving section 206 refers to the terminal information in a Jth column which is corresponded to the detected service ID. The service retrieving section 206 determines whether the terminal information in the Jth column is the information concerned with the own terminal device or not (step S806). When the information is concerned with the own terminal device, the service retrieving section 206 instructs the application management section 203 and the application execution section 204 to download and execute an application program (step S813). After this instruction, the service retrieving section 206 increments the variable J by one (step S815), and by referring to the terminal information in a next column, determines again whether the information is concerned with the own terminal device or not (step S806). This increment in the variable J is performed until reaching a maximum column of the service information table 107 (step S816).

When the information is not concerned with the own terminal device, i.e., concerned with another terminal device, the service retrieving section 206 refers to the terminal information in a Kth row of the terminal information table 211. Here, the service retrieving section 206 determines whether the terminal information in the Kth row matches with the terminal information in the Jth column or not (step S809). When it matches, the service retrieving section 206 transmits to an address of the other terminal device, a program URL of the service information table 107, and instructs for an execution of an action which corresponds to the application program (step S814). After this instruction, the service retrieving section 206 increments the variable J by one (step S815), and determines again whether the information is concerned with the own terminal device or not, by referring to the terminal information in the next column (step S806). When it does not match, the service retrieving section 206 increments the variable K by one (step S810), and determines again whether the terminal information matches or not, by referring to the terminal information in the next row (step S809). This process is repeated until detecting the matching terminal information. When there is no matching terminal information even after going to a last row of the terminal information table 211, the service retrieving section 206 determines that the process is invalid, and terminates the process (step S811 and S812). This termination is performed for example, by transmitting a cancel signal to a terminal device which has transmitted an action.

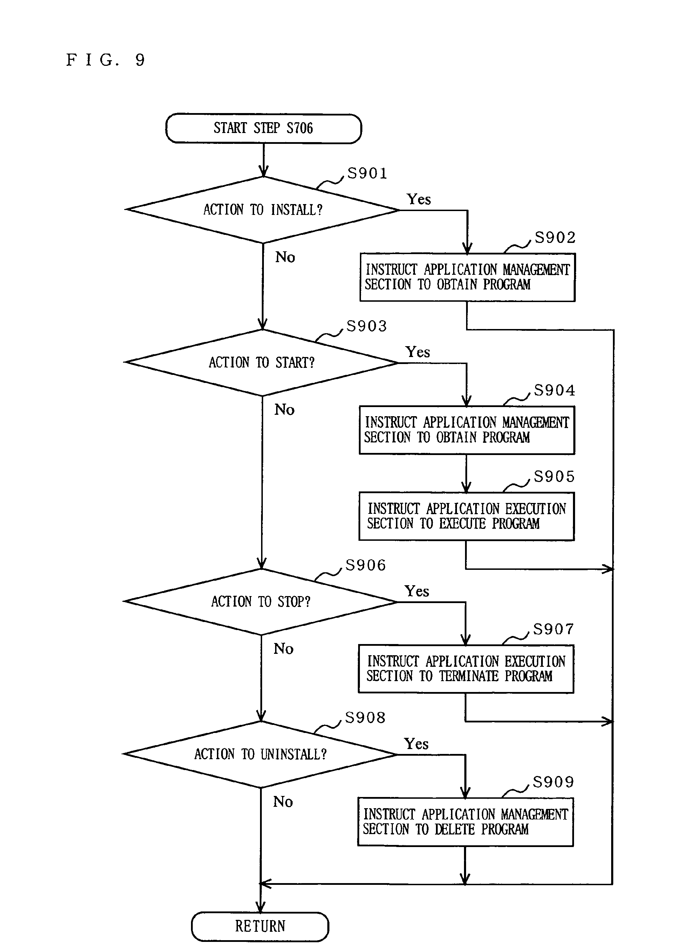

A concrete example of a process performed by the service execution section 207 at step S706 is shown in FIG. 9. When an action and a program URL are notified, the service execution section 207 determines whether the action is "install" or not (step S901). When the action is "install", the application management section 203 transmits a program distribution request to the program distribution section 101 of the application server 10 and downloads the program (step S902). When the action is not "install" the service execution section 207 determines whether the action is "start" or not (step S903). When the action is "start", the application management section 203 transmits a program distribution request to the program distribution section 101 of the application server 10 and downloads the program (step S904). After downloading is completed, the application management section 203 instructs the application execution section 204 to execute the program (step S905).

When the action is not "start", the application management section 203 determines whether the action is "stop" or not (step S906). When the action is "stop", the application management section 203 instructs the application execution section 204 to terminate the program (step S907). When the action is not "stop", the application management section 203 determines whether the action is "uninstall" or not (step S908). When the action is "uninstall", the application management section 203 instructs the application management section 203 to delete the program (step S909). On the other hand, when the action is not "uninstall", the application management section 203 terminates this process.

As above, a terminal device and a method according to an embodiment of the present invention allow the terminal device to autonomously start or end a service on detecting an event. Thus, even without having a distribution station for monitoring an entry/exit of a terminal device into/from a service area, a user is allowed to start or end a service without performing an operation required for download. In addition, by downloading a program for both a terminal device and another terminal device subjected to control, a communication procedure and communication data can be changed, thus a terminal device with improved convenience over a conventional terminal device is realized.

Note that though in the above embodiment the application management section 203 downloads the action information table 106 from the service information distribution section 103, the action information table 106 may be preinstalled in the terminal device 21. Furthermore, the action information table 106 may be provided so as to be changed in accordance with a program executed by the application execution section 204.

Also in the above embodiment, a case where the application management section 203 downloads the whole action information table 106 from the service information distribution section 103 is shown. However, instead of downloading the whole action information table 106, a configuration such that the terminal device 21 transmits the event information to the application server 10 and to be notified from the application server 10 of an action and a service ID which corresponds to the event information may be adopted. In addition, a configuration such that the terminal device 21 transmits a distribution request for an action information table including a terminal information table which is managed by the cooperative device management section 201, and to be notified from the application server 10 only of a combination of an executable action and service ID based on the terminal information table, may be adopted. Furthermore, the above two methods may be combined.

The action information table 106 may also be rewritten by an application program executed by the application execution section 204. In this case, the service retrieving section 206 retrieves, based on the rewritten action information table 106, a service and an action corresponding to an event detected by the event detection section 205. In addition, the application execution section 204 may execute a program for performing data exchange with another terminal device which cooperatively operates a same service.

An automatic execution method performed by a terminal device as described in the above embodiment is typically realized by interpreting the predetermined program data by a CPU, the program data capable of executing the above process and stored in a storage device (ROM, RAM, hard disk, and others). In this case, the program data may be installed into a storage device via a storage medium such as a CD-ROM or a flexible disk, executed directly from a storage medium, or installed into a storage device by downloading from a network.

Also, each of the following functional bocks; the cooperative device management section 201, the application management section 203, the application execution section 204, the event detection section 205, the service retrieving section 206, and the service execution section 207, comprising each of the terminal devices 21 to 2N of the present invention, is typically a LSI (referred to an IC, a system LSI, a super LSI, or an ultra LSI, etc., depending on a degree of integration) which is an integrated circuit (refer to a dashed line in FIG. 5). Each function block may be provided as a chip, or may be integrated into a chip as a part or as a whole.
In addition, a method of circuit integration is not limited to a LSI, but may be realized by a dedicated circuit or a general-purpose processor. Also, a FPGA (Field Programmable Gate Array) in which programming is possible after manufacturing a LSI, or a reconfigurable processor in which a connection or a setting of a circuit cell inside a LSI is reconfigurable may be used.
Furthermore, as a result of an advance in semiconductor technology or other derived technologies, if a circuit integration technology to replace a LSI appears, the technology may of course be used for integrating the function blocks. There is a possibility of applying technologies such as biotechnology.

### INDUSTRIAL APPLICABILITY

The terminal device of the present invention may be used in systems such as a system in which a specific event is provided with a corresponding service in advance, and especially useful in a case where it is required to independently determine an occurrence of an event and autonomously process a service in response to the event, and such.

## Claims

1. A terminal device for providing a predetermined service in response to an occurrence of an event, the terminal device comprising:
an event detection section for detecting a specific event;
a service retrieving section for retrieving from a predetermined information table, a service and an action corresponding to the detected event;
a service execution section for instructing to determine and to execute an application program required for an operation of the retrieved service and action;
an application management section for downloading from a server connected to a network, the required application program in accordance with the instruction from the service execution section; and
an application execution section for operating the retrieved service and action by using the downloaded application program in accordance with the instruction from the service execution section.

2. The terminal device according to claim 1, further comprising a cooperative device management section, connected to the network, for storing information on another terminal device which provides a service in cooperation with the terminal device, wherein
the service execution section refers to the information on the other terminal device, and provides an instruction to the cooperative other terminal device to download from the server, the application program required for operating the retrieved service and action.

3. The terminal device according to claim 1, wherein the service retrieving section downloads in advance, the predetermined information table from the server.

4. The terminal device according to claim 2, wherein the service retrieving section downloads in advance, the predetermined information table from the server.

5. The terminal device according to claim 1, wherein the service retrieving section transmits, to the server, information on the detected event, and downloads a part of the predetermined information table which corresponds to the detected event.

6. The terminal device according to claim 2, wherein the service retrieving section transmits, to the server, information on the detected event, and downloads a part of the predetermined information table which corresponds to the detected event.

7. The terminal device according to claim 2, wherein the service retrieving section transmits, to the server, information on the other terminal device stored in the cooperative device management section, and downloads a part of the predetermined information table, the part being operable in cooperation between the terminal device and the other terminal device.

8. The terminal device according to claim 2, wherein the service retrieving section transmits, to the server, information on the detected event and information on the other terminal device stored in the cooperative device management section, and downloads a part of the predetermined information table, the part which corresponds to the detected event and being operable in cooperation between the terminal device and the other terminal device.

9. The terminal device according to claim 1, wherein the service retrieving section retrieves from an information table rewritten by the application program executed by the application execution section, a service and an action corresponding to the detected event.

10. The terminal device according to claim 1, wherein the application execution section executes a program for exchanging data with the other terminal device which cooperatively operates a same service.

11. A system in which at least one terminal device for providing a predetermined service in response to an event, and a server storing a plurality of application programs are connected via a network, wherein
the server comprises:
a data management section for storing an application program corresponded to a service; and
a program distribution section for distributing an application program in response to a request from the at least one terminal device; wherein
the at least one terminal device comprises:
an event detection section for detecting a specific event;
a service retrieving section for retrieving from a predetermined information table, a service and an action corresponding to the detected event;
a service execution section for instructing to determine and to execute an application program required for an operation of the retrieved service and action;
an application management section for downloading from a server connected to a network, the required application program in accordance with the instruction from the service execution section; and
an application execution section for operating the retrieved service and action by using the downloaded application program in accordance with the instruction from the service execution section.

12. A method for providing a predetermined service in response to an occurrence of an event by using a terminal device, the method comprising:
a step for detecting a specific event;
a step for retrieving a service and an action corresponding to the detected event from a predetermined information table;
a step for determining an application program required for operating the retrieved service and action;
a step for downloading from a server connected to a network, the required application program being determined; and
a step for operating the retrieved service and action by using the downloaded application program.
